# EUROPÄISCHE PATENTSCHRIFT

(11) **EP 4 188 803 B1**
(45) Veröffentlichungstag und Bekanntmachung des Hinweises auf die Patenterteilung: **24.06.2026**
(21) Anmeldenummer: 21758308.7
(22) Anmeldetag: 02.07.2021
(51) Int. Cl.: B64D 35/02, B64D 27/02

(54) **HYBRID-ELEKTRISCHES ANTRIEBSSYSTEM FÜR MEHRMOTORIGE FLUGZEUGE**
HYBRID-ELECTRIC DRIVE SYSTEM FOR MULTI-ENGINE AIRCRAFT
SYSTÈME D'ENTRAÎNEMENT ÉLECTRIQUE HYBRIDE POUR AÉRONEFS MULTIMOTEURS

(30) Priorität: 02.07.2020 DE 102020117449
(43) Veröffentlichungstag der Anmeldung: 07.06.2023
(73) Patentinhaber: Deutsche Aircraft GmbH, 82234 Weßling (DE)
(72) Erfinder: RIEDIGER, Carsten, 82211 Herrsching (DE); NÜSSELER, Martin, 86869 Oberostendorf (DE)
(74) Vertreter: Sawodny, Michael-Wolfgang
(86) Internationale Anmeldenummer: PCT/DE2021/100571
(87) Internationale Veröffentlichungsnummer: WO 2022/002319

(56) Entgegenhaltungen:
- EP-A1- 3 613 674
- EP-B1- 2 962 885
- WO-A1-2020/245363
- US-A1- 2017 327 238
- US-A1- 2018 118 356
- US-A1- 2018 370 646
- US-A1- 2019 322 382
- SPIERLING TODD ET AL: "Parallel Hybrid Propulsion System for a Regional Turboprop: Conceptual Design and Benefits Analysis", 2019 AIAA/IEEE ELECTRIC AIRCRAFT TECHNOLOGIES SYMPOSIUM (EATS), AIAA, 22 August 2019 (2019-08-22), pages 1 - 7, XP033678024, DOI: 10.2514/6.2019-4466

## Beschreibung

Die Erfindung betrifft ein mehrmotoriges Flugzeug entsprechend dem Oberbegriff des Anspruches 1, sowie ein Verfahren zum Betrieb eines zweimotorigen Flugzeugs.

Unter einem Flugzeug ist insbesondere ein motorbetriebenes Starrflügelflugzeug zu verstehen. Unter den Begriff Flugzeug fallen aber z.B. auch Drehflügler (Rotorflugzeug, Hubschrauber) und Motorsegler. Flugzeuge und deren Flugantriebe lassen sich hinsichtlich der geltenden Bau- und Zulassungsvorschriften unterscheiden. Die von der EASA herausgegebene Vorschrift CS-23 sind für leichte, starrflügelige Motorflugzeuge anzuwendenden. Sie betrifft: Flugzeuge in den Kategorien ,normal, utility oder aerobatic' mit maximal 9 Sitzplätzen (ohne Pilot(en) und einer maximalen Startmasse von 5.670 kg sowie für Flugzeuge der Kategorie ,commuter' mit maximal 19 Sitzplätzen (ohne Pilot(en)) und einer maximalen Startmasse von 8.618 kg. Die CS-25 ist ebenfalls eine von der EASA herausgegebene Bauvorschrift über die Bauartzulassung für Großflugzeuge, insbesondere für große, turbinengetriebene Flugzeuge.

Regionalverkehrsflugzeuge sind überwiegend durch eine Bauweise mit geraden, ungepfeilten Tragflächen und einer Reisegeschwindigkeit von 500 bis 700 km/h charakterisiert. Heutzutage ist der Turbopropantrieb Haupteinsatzbereich für Regionalverkehrsflugzeuge in der Zivilluftfahrt. Ein prominenter Vertreter dieser Flugzeugkategorie ist die Dornier 328-100.

Turboprop (Kunstwort aus Turbojet und Propeller) ist eine landläufige Bezeichnung für Propellerturbinenluftstrahltriebwerk (abgekürzt PTL), oft auch vereinfacht als Propellerturbine bezeichnet. Ein Turboprop ist eine Wärmekraftmaschine mit kontinuierlicher innerer Verbrennung (thermische Strömungsmaschine) und wird hauptsächlich als Luftfahrtantrieb verwendet. Umgangssprachlich wird häufig auch ein durch PTL angetriebenes Flugzeug als "Turboprop" bezeichnet.

Diese Art des Triebwerks zeichnet sich durch einen relativ niedrigen spezifischen Kraftstoffverbrauch aus, weswegen es vornehmlich bei Transport- und Kurzstreckenflugzeugen eingesetzt wird. Ein weiterer ziviler Einsatzbereich sind kleinere Geschäftsreiseflugzeuge wie z.B. TBM-850. Militärisch werden Turboprops vorwiegend in taktischen Transportflugzeugen verwendet. Flugzeuge mit diesen Triebwerken sind auf Fluggeschwindigkeiten bis zu 80 Prozent der Schallgeschwindigkeit (0,8 Mach) beschränkt, was in 8.000 m Höhe bei Normalbedingungen etwa 870 km/h entspricht. In diesem Geschwindigkeitsbereich arbeiten Turboprops wirtschaftlicher als reine Turbinentriebwerke.

Das Turboprop-Triebwerk besteht aus einer Gasturbine, die einen Propeller antreibt, in der Regel über ein drehzahlverminderndes Getriebe. Der Schub des Triebwerks wird dabei größtenteils vom Propeller erzeugt - das den Auslass-Diffusor verlassende Arbeitsgas trägt mit lediglich max. 10 % zum Gesamtschub bei, womit sich das Vortriebsprinzip deutlich von Turbojet-Triebwerken unterscheidet und dem Turbofan ähnelt. Zur Schuberzeugung wird vom Propeller eine große Luftmenge bewegt, diese dabei jedoch im Vergleich zu Turbojet-Triebwerken nur schwach beschleunigt. Bei reinen Turbojet-Strahltriebwerken werden dagegen wesentlich kleinere Mengen des Antriebsmediums sehr viel stärker beschleunigt.

Je nach Fluggeschwindigkeit, Flughöhe und Last wird der Anstellwinkel der Propellerblätter verändert, so dass sowohl die Turbine als auch die Luftschraube möglichst gleichbleibend im optimalen Drehzahlbereich arbeiten.

Die Energie für den Antrieb der Luftschraube liefert die Gasturbine. Sie saugt Luft ein, die in einem axialen oder radialen, meist mehrstufigen Turbokompressor verdichtet wird. Anschließend gelangt sie in die Brennkammer, wo der Treibstoff mit ihr verbrennt. Das nun heiße energiereiche Verbrennungsgas durchströmt die meist axial und mehrstufig aufgebaute Turbine, wobei es sich ausdehnt und abkühlt. Die auf die Turbine übertragene Energie treibt über eine Welle einerseits den Turbokompressor und andererseits über ein Getriebe die Luftschraube an. Die Abgase werden nach hinten ausgestoßen.

Die Optimierung der Turbomaschinen erfolgt üblicherweise für die dominierende Flugphase, üblicherweise die Reiseflugphase da diese auch den höchsten Anteil am Energieverbrauch über die Mission aufweist. Eine gleichwertige, hohe Betriebseffizienz ist nicht über alle Flugphasen möglich. Während für Mittel- und Langstrecken die maximale Effizienz für den deutlich dominierenden Reiseflug ausgelegt und erreicht werden kann, sind die Betriebszustände für Kurz- und Ultrakurzstrecken wesentlich weniger dominant und unterschiedlicher. Dies hat zur Folge, dass Triebwerke für Regional- und Kurzstreckenflugzeuge über die Gesamtmission deutlich weniger bei optimaler Effizienz betrieben werden und relativ zu Kurz- und Langstrecken schlechteren spezifischen Kraftstoffverbrauch pro Passagier haben. Dabei spielt u.a. auch der unterschiedliche Abfall der propulsiven und thermischen Effizienz eine Rolle, da z.B. ein Propellerflugzeug niedriger fliegt und geringere, höhenabhängige Schubverluste im Reiseflug erfährt als vergleichsweise ein Langstreckenflugzeug mit Turbofan-Triebwerk. Dies führt dazu, dass Langstreckentriebwerke wesentlich konstanter bei hoher Leistung laufen und guter Effizienz betrieben werden, als im Steigflug, während Regionalflugzeuge sehr deutlich breitere Leistungsbereiche, z.B. bei Start, Steigflug und Reiseflug haben.

Daher ergeben sich im speziellen für Regionalflieger mit Propeller, aber auch für andere zweimotorige Flugzeuge mit Schaufelrad oder Rotor, sehr unterschiedliche Schubanforderungen über die Mission, die durch eine Hybridisierung der thermischen Maschinen mit einer elektrischen Maschine effizienter ausgelegt und betrieben werden kann.

Hinzu kommt die Herausforderung der Reduzierung von CO2-, NOX-, und Lärmemissionen.

Die Frage, die sich derzeit stellt, ist, ob in der Zukunft elektrisch betriebene Flugzeug zum Einsatz kommen wird? Möglicherweise. Airbus, Rolls Royce, GE und Siemens sind der Meinung, dass sie das Problem der Reduzierung von CO2, NOX, und Lärmemissionen durch den Ersatz von ein Turbofan-Triebwerk mit einem elektrischen Motor lösen können und folgen dabei dem Automobilindustrie auf dem Weg elektrisch, oder zumindest hybrid, angetrieben Fahrzeugen ("Flightpath 2050 Europe's Vision for Aviation," [Online]. Verfügbar: https://ec.europa.eu/transport/sites/transport/files/modes/air/doc/flightpath2050.pdf. [Zugriff 14 03 2018]).

An einem entsprechenden hybridisierten Turbofan-Antrieb für zweistrahlige Verkehrsflugzeuge arbeitet GE International, wie die Offenbarung der EP 3 421 760 A1 zeigt. Dabei ist jeweils ein Elektromotor mit der Hochdruckwelle des einen und mit der Niederdruckwelle des anderen, zweiten Turbofan-Triebwerks gekoppelt. Zur Speisung der Elektromotoren ist ein elektrischer Energiespeicher vorgesehen, sodass die Elektromotoren in bestimmten Betriebszuständen zusätzliche Antriebsleistung an den gekoppelten Turbofan zur Verfügung stellen können. Eine ähnliche Lösung schlägt SNECMA in der Veröffentlichung WO 2009/153471 A2 sowie Boeing in der Veröffentlichung US 20191322382 A1 vor. Auf die Problematik der fehlertoleranten Kupplung von Generator und Brennkraftmaschine geht General Electric in der veröffentlichten Patentanmeldung EP 3 613 674 A1 ein.

Problematisch allerdings bleibt die Leistungs-Masse-Dichte der heute zur Verfügung stehenden Batterietechnologie um nennenswert in Konzepten wie zuvor beschrieben, elektrische Antriebsleistung zur Verfügung stellen zu können. Vereinfacht ausgedrückt, bietet die aktuelle Batterietechnologie nicht über eine ausreichend hohe Energiedichte; und das Leistungsgewicht-Verhältnis ist nicht hoch genug. Zum Beispiel, Brennbare Brennstoffe wie Kerosin haben eine Energiedichte von etwa 40 MJ/kg, etwa 12.000 Wh/kg. Die Energiedichte der Lithium-Ionen-Batterien, die des ersten E-Fan, ist etwa 60 Mal weniger. Die spezifische Energie der Batterien beträgt damit etwa nur 2% die des flüssigen Brennstoffs. Zur Erinnerung: die167 kg Batterien des E-Fan mit 600 kg Masse reichte für etwa eine Flugstunde mit niedriger Geschwindigkeit fliegen. Im Vergleich dazu, das Leergewicht eines Bae146 beträgt etwa 24.000 kg. Die Zahlen scheinen darauf hinzudeuten, dass das Batteriegewicht für ein elektrisches Flugzeug 60 Mal so groß wie die Treibstoffgewicht für ein aktuelles Flugzeug für den gleichen Flug wäre. (,Batteries against Fossil Fuel',https://batteryuniversity.com/learn/archive/batteries_against_fossil_fuel (Zugriff: 17.06.2020).

Hiervon ausgehend ist es Aufgabe der Erfindung, ein mehrmotoriges Flugzeug und ein Verfahren zum Betrieb desselben anzugeben, welches unter Nutzung eines hybriden Antriebssystems die typischen Flugbetriebsphasen optimiert.

Erfindungsgemäß wird die Aufgabe bezüglich des Flugzeuges durch ein mehrmotoriges Flugzeug mit den Merkmalen des Anspruches 1 gelöst.

Das Flugzeug basiert auf dem Einsatz von zwei elektro-hybridisierten Turbomaschinen oder sonstigen thermischen Verbrennungsmaschinen an je einem Propulsor und einer speziellen Regelung- und Steuerungseinheit für thermische und elektrische Maschinen. Diese Antriebsarchitektur ermöglicht eine optimierte- und betriebszeitenreduzierte Nutzung der Turbomaschinen bzw. thermischen Verbrennungsmaschinen unter dem Einsatz von zusätzlichen elektrischen Maschinen (Motor/Generator).

Im Wesentlichen lassen sich durch die Erfindung zumindest vier erhebliche Vorteile gegenüber den aus dem bekannten Stand der Technik bekannten Antriebssystemen erzielen:
a) Senkung des Kraftstoffverbrauchs durch optimierte, angepasste Nutzung der Brennkraftmaschinen an die verschiedenen Flugphasen. Dabei ist die Hybridisierung der Antriebseinheiten von wesentlicher Bedeutung, die eine variabel zuschaltbare elektrische Motor-Generatoreinheit auf einem gemeinsamen Getriebe beinhaltet. Durch einen sukzessiven Übergang der Antriebsleistung durch die elektrische Maschine kann diese die Leistung der thermischen Maschine im Übergang von Steigflug auf Reiseflug übernehmen. Von Hilfe ist dabei eine Ausführung, wonach jede der beiden thermischen Maschinen so ausgelegt ist, dass eine Turbomaschine im Reiseflug ausreichend Drehmoment inklusive der elektrischen Verlustleistung der elektrischen Maschinen erzeugen kann. Die elektrischen Maschinen erzeugen die Hälfte des erforderlichen Drehmoments im Reiseflug über das Getriebe und geben es an den Propulsor weiter. Damit kann bei einem Flugzeug mit zwei Antriebseinheiten mit einer thermischen Maschine und zwei elektrischen Maschinen die vorhandene Leistung auf beiden Getrieben gleichmäßig verteilt werden.
b) Eine wesentliche Rolle spielt im erfindungsgemäßen Antriebssystem das Getriebe, dessen Eingangswellen einen jeweils optimierten Drehzahlbereich sowohl der thermischen Maschine als auch der elektrischen Maschine ermöglichen, um somit das Drehmoment optimal an die Propulsorwelle abzugeben. Dies ermöglicht eine gewichtsoptimierte Bauweise und verlustoptimierte Betriebszustände beider, der elektrischen und thermischen Maschinen.
b) Eine wesentliche Rolle spielt im erfindungsgemäßen Antriebssystem das Getriebe, dessen Eingangswellen einen jeweils optimierten Drehzahlbereich sowohl der thermischen Maschine als auch der elektrischen Maschine ermöglichen, um somit das Drehmoment optimal an die Propulsorwelle abzugeben. Dies ermöglicht eine gewichtsoptimierte Bauweise und verlustoptimierte Betriebszustände beider, der elektrischen und thermischen Maschinen.
c) Ein weiterer wichtiger Aspekt der Erfindung ist die Reduzierung der Betriebszeiten der thermischen Maschinen über die Flugstunden zur Senkung der Wartungskosten und Verlängerung der Wartungsintervalle. Generell erfordern elektrische Maschinen bei gleicher Nennleistung einen geringeren Wartungsaufwand und -kosten, da die elektrische Motor-Generatoreinheit typischer Weise über keine 'heißen' Komponenten verfügt.
d) Schließlich gestattet das Antriebssystem eine Erhöhung der Sicherheit im "Single Engine Failure" Fall. Insbesondere in den dabei kritischen Flugphasen, Start, erste Steigflugphase und Landeanflug (Take-Off, Initial/Climb und Approach) übernimmt die fehlende Leistung sofort über die elektrischen Maschinen wieder symmetrisch auf beide Seiten verteilt werden kann.

Zusammengefasst werden drei wesentliche Verbesserungen gegenüber dem Einsatz von zwei singulären thermischen Maschinen erreicht:
1. Optimierung des Betriebsbereiches der thermischen Maschinen und eine Reduzierung des spezifischen Kraftstoffverbrauches,
2. Deutliche Reduzierung der Betriebszeiten der einzelnen thermischen Maschinen in wechselweiser Nutzung gegenüber den Flugzeugbetriebsstunden.
3. Erhöhte Betriebssicherheit für den Sicherheitsrelevanten Ausfall einer thermischen Maschine und der Vermeidung von asymmetrischem Schub.

Im Vergleich zu in der Entwicklung befindlichen, kapazitätsstarken, batteriebasierten Hybridkonzepten ergibt sich eine wesentliche gewichtsoptimierte Bauweise, da gegenwärtige Batteriekonzepte nach wie vor nur eine geringe spezifische Energiedichte vorzuweisen haben.

Diese Architektur kann in unterschiedlichen Varianten umgesetzt werden:
a) Hybride thermischen Maschinen und Elektromaschinen mit optimiertem Flugprofil und angepasster Leistung
b) Einbindung einer zusätzlichen Pufferenergiequelle für die Unterstützung im Wechsel der verschiedenen Systembetriebszustände und damit erweiterter Single Engine Betriebszustand innerhalb eines Missionsprofils.

Generell bezieht sich die Erfindung auf Antriebe für kleine und große Transportflugzeuge (CS-23 und CS-25) mit zweimotorigen Antrieben (Kolbenmaschinen oder Turbomaschinen), die thermische Energie in mechanische Antriebswellenleistung wandeln und einen Propulsor (Propeller, Schaufelrad, Rotor) zur Schuberzeugung antreiben.

Die erforderliche Redundanz wird durch die beiden Antriebseinheiten inkl. elektrischer Motor-Generatoreinheiten erzeugt. Beide Antriebseinheiten haben die gleiche Leistung und partitionieren mit gleicher Schubleistung über das gesamte Missionsprofil. Der hauptsächlich dimensionierende Fehlerfall - komplett Ausfall eines Antriebes ist in der Auslegung jeder Antriebseinheit mitberücksichtigt und erlaubt in jeder Flugphase ein manövrieren des Flugzeuges mit vorgegeben Limitationen bis zur sicheren Landung.

Schubanpassungen über die Flugmission werden in gleichem Maße von beiden Antrieben und optional mit zusätzlicher, aktiver Blattverstellung vorgenommen. Die Optimierung von Turbomaschinen erfolgt üblicherweise für die dominierende Flugphase, primär während der Reiseflugphase, da diese auch den größten Anteil und Energieverbrauch über die Mission darstellt. Eine gleichwertige, hohe Betriebseffizienz ist nicht über alle Flugphasen möglich. Während für Mittel- und Langstrecken die maximale Effizienz für den deutlich dominierenden Reiseflug ausgelegt und erreicht werden kann, sind die Betriebszustände für Kurz- und Ultrakurzstrecken wesentlich weniger dominant und unterschiedlicher. Dies hat zur Folge, dass Triebwerke für Regional- und Kurzstreckenflugzeuge über die Gesamtmission deutlich weniger bei optimaler Effizienz betrieben werden und relativ zu Kurz- und Langstrecken schlechteren spezifischen Kraftstoffverbrauch pro Passagier haben.

Dabei spielt u.a. auch der unterschiedliche Abfall der propulsiven und thermischen Effizienz eine Rolle, da z.B. ein Propellerflugzeug in niedrigeren Flughöhen fliegt und geringere, höhenabhängige Schubverluste im Reiseflug erfährt als vergleichsweise ein Langstreckenflugzeug mit Turbofantriebwerk. Dies führt dazu, dass Langstreckentriebwerke wesentlich konstanter bei hoher Leistung laufen und guter Effizienz betrieben werden, im Steigflug als auch im Reiseflug, während Regionalflugzeuge sehr deutlich breitere Leistungsbereiche, z.B. bei Start, Steigflug und Reiseflug haben.

Daher ergeben sich im speziellen für Regionalflugzeuge mit Propeller, aber auch für andere zweimotorige Flugzeuge mit Schaufelrad oder Rotor, sehr unterschiedliche Schubanforderungen über die Mission, die durch eine Hybridisierung der thermischen Maschinen mit einer elektrischen Maschine effizienter ausgelegt und betrieben werden kann.

Während bisherige hybride Antriebssysteme und Architekturen für Flugzeuge das Ziel hatten zusätzliche oder eine andere Anordnung propulsiver Elemente (Propeller, Rotoren, Schaufelräder) oder zusätzliche, alternative Energiequellen wie Batterien oder Brennstoffzellen zu integrieren, erreicht diese Erfindung eine höhere Effizienz ohne zusätzliche Propulsor oder Energiequellen. Im Gegensatz bisheriger hybrider Konzepte, wie z.B. die Anordnung mehrerer Propulsor verteilt über die Spannweite des Flügel, um bei niedrigen Geschwindigkeiten einen besseren Auftrieb zu erzeugen, was ein deutliches Mehrgewicht für einen Vorteil während der kurzen Flugphasen bei Start und Landung ist, oder die Nutzung von Energiesystemen, deren Leistungsdichte heute nicht für größere Flugzeuge ausreichend ist, kann das Antriebssystem dieser Erfindung mit heutiger Technologie und Flugzeugkonzepten mit signifikanten Vorteilen umgesetzt werden.

Ein wesentlicher Aspekt der Erfindung ist, dass für viele Flugzeuge, insbesondere für Regionalflugzeuge mit Propellerantrieb, der geforderte Schub für den Start gegenüber dem Reiseflug deutlich höher ist und damit die thermischen Maschinen über einen hohen Anteil der Flugmission nur bei rund der Hälfte der Leistungsfähigkeit betrieben werden kann. In gleicher Weise gilt dies auch für andere Propulsor oder alternative, neue Flugzeug- und / oder Propulsorkonzepte, wie z.B. Open-Rotor.

Die Kombination von zwei hybriden Antriebseinheiten ermöglicht über den wesentlichen Anteil des Flugs ein reduziertes Betriebsspektrum der thermischen Maschinen.

Das Flugzeug kann in der Reiseflugphase als auch die Sinkflugphase mit einer thermischen Maschine betrieben werden kann, die die Hälfte der Leistung / Drehmoments über die am Getriebe mitangebaute E-Maschine, die als Generator und Motor betrieben werden kann, als elektrische Energie auf die E-Maschine der anderen hybriden Antriebseinheit überträgt.

Die Ansteuerung und Regelung der elektrischen Maschinen kann über unterschiedliche elektrische Systemarchitektur umgesetzt werden. je nach geforderter Qualität für die Schubregulierung.

Entweder wird die Leistungsaufnahme und Abgabe mechanisch im Getriebe gelöst, was ausreichend ist, wenn die elektrischen Maschinen der Leistung der thermischen Maschine folgen, bedeutet die thermische Maschine gibt die mechanische Kraft an das Getriebe ab, dort wird es zwischen Propulsor und aufgeschalteter E-Maschine verteilt. Zwischen den beiden E-Maschinen ist ein einfaches Wechselstromnetzwerk, in der die E-Maschine im Generatorbetrieb die mechanische Energie als elektrische Energie an die antreibende E-Maschine auf der anderen Seite weiterleitet. Damit treibt die E-Maschine den Propulsor synchron, mit der an das Getriebe aufgebrachten mechanischen Energie an, natürlich erhöht um den Faktor des elektrischen Wirkungsgrades.

Alternative kann die elektrische Leistungsaufnahme und Abgabe der beiden Motor-Generatoreinheiten über Leistungsumwandler und Kontroller in einem Gleichspannungsnetzwerk geregelt werden. In dieser Variante kann die Drehzahl des elektrisch angetriebenen Propulsors unabhängig und exakt im Rahmen der vorhandenen thermischen Leistung geregelt werden.

Diese auf einem Gleichspannungsnetzwerk und Wechsel- Gleichspannungsumrichter beruhende Architektur ermöglicht zusätzlich zu der individuellen Regelung auch die Möglichkeit eine zusätzliche elektrische Energiequelle anzuschließen, die entweder während des Wechsels der Betriebsmodi, als ergänzende Energiequelle (Energiepuffer) dienen, oder für einen kurzen Leistungspeak, e.g. in einem Fehlerfall, überbrücken kann. Dies kann je nach Leistungsauslegung der thermischen und elektrischen Maschinen, bzw. im Falle einer Retro-Fit Anwendung notwendig oder sinnvoll sein. Angesichts der heute zur Verfügung stehenden Leistungsdichten von elektrischer Energiespeicher, wären die Nutzungsphasen streng zu limitieren und die Größe und damit Masse einer Batterie beispielsweise, zu beschränken.

Am Beispiel des Regional Turbopropeller Flugzeugs Dornier 328-100 ist eine Kraftstoffeinsparung zwischen 10% bis 17% möglich, je nach detailliertem elektrischem Wirkungsgrad, Installationsgewicht und Missionsprofil - Flughöhe und Geschwindigkeit.

Die Betriebsstunden der einzelnen thermischen Maschinen, unter Annahme eines gleichmäßigen, wechselnden Betriebes während Reiseflug und Sinkflug, lässt sich um ca. 30% reduzieren (als Referenz eine 60 min Mission), was sich eins zu eins in einer Verlängerung der Wartungsintervalle und Reduzierung der Wartungskosten der thermischen Maschinen wiederspiegelt.

Die in dieser Erfindung beschriebene Antriebsarchitektur kann sogar als Retrofit-Variante für ein bestehendes Flugzeug dimensioniert und integriert werden.

Weitere Merkmale, Vorteile und Wirkungen der Erfindung ergeben sich aus der nachfolgenden Beschreibung bevorzugter Ausführungsbeispiele der Erfindung, wie sie in der Zeichnung wiedergegeben sind. Es zeigen:
- Fig. 1a: eine Systemskizze eines hybriden Antriebssystems mit schematische Darstellung der Systemarchitektur,
- Fig. 1b: eine Systemskizze eines hybriden Antriebssystems mit schematische Darstellung der Systemarchitektur nach Fig. 1a mit zwei AC-DC-Wandlern,
- Fig. 1c: eine Systemskizze eines hybriden Antriebssystems mit schematische Darstellung der Systemarchitektur nach Fig. 1b mit einer zusätzlichen Energiequelle,
- Fig. 2: eine Seitenansicht eines zweimotorigen Flugzeuges mit schematische Darstellung des hybriden Antriebssystems nach Fig. 1a,
- Fig. 3: ein Diagramm zu Drehmoment und Kraftstofffluss in den Betriebsphasen eines Flugzeuges nach Fig. 2 und eines Flugzeuges nach dem Stand der Technik,
- Fig. 4: eine Systemskizze eines hybriden Antriebssystems mit schematische Darstellung der Systemarchitektur nach Fig. 1b im primären Betriebsmodus,
- Fig. 5: eine Systemskizze eines hybriden Antriebssystems mit schematische Darstellung der Systemarchitektur nach Fig. 1b im sekundären Betriebsmodus und
- Fig. 6: eine Systemskizze eines hybriden Antriebssystems mit schematische Darstellung der Systemarchitektur nach Fig. 1c im sekundären Betriebsmodus.

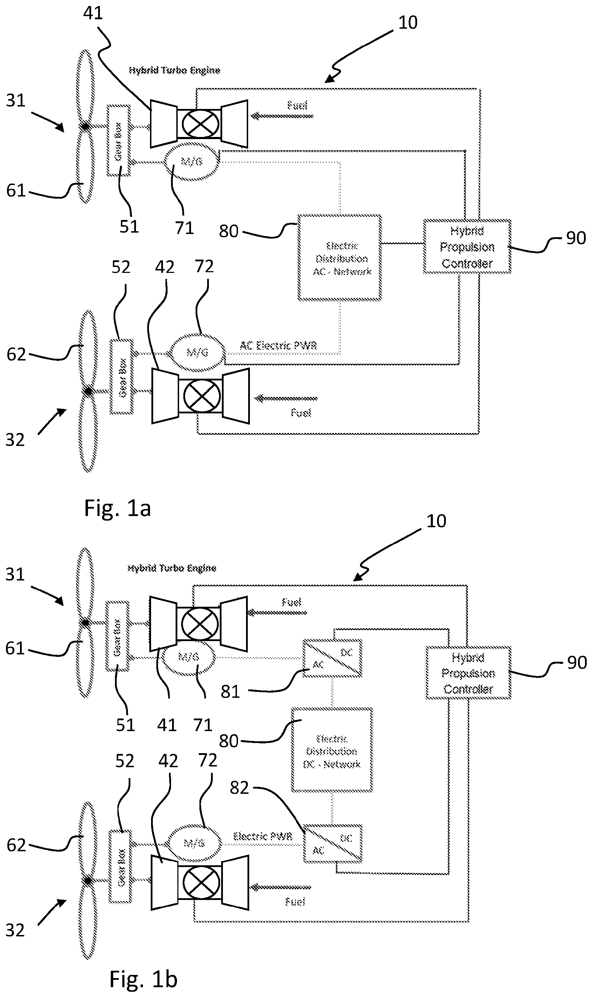

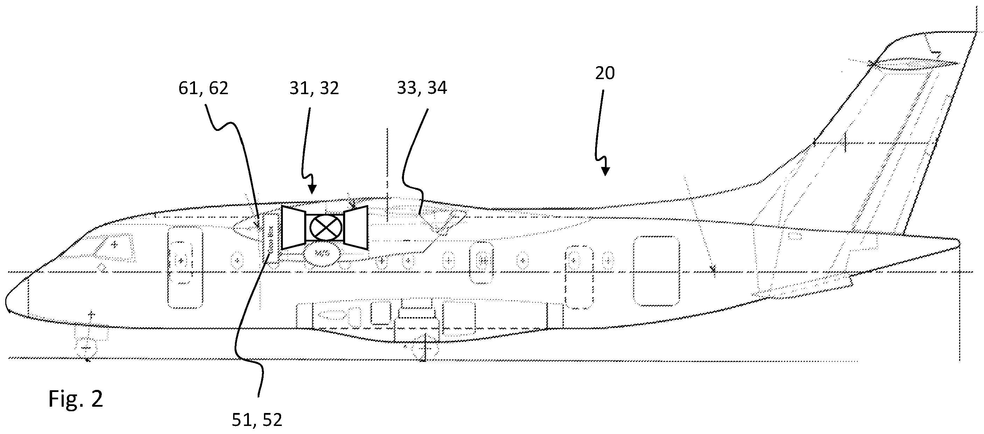

Die **Fig. 1a** zeigt die Systemarchitektur eines Antriebssystems 10 für ein zweimotoriges Flugzeug 20, wie es in Fig. 2 zu sehen ist. Das Antriebssystem 10 umfasst zwei unabhängig voneinander betreibbare hybrid-elektrische Antriebseinheiten 31 und 32. Jede hybrid-elektrische Antriebseinheit 31, 32 weist eine Gasturbine 41, 42 mit angeflanschtem Reduziergetriebe 51, 52 auf, über welches jeweils ein Propeller 61, 62 mit variabler Blattverstellung gekoppelt ist. Entsprechende Gasturbinen 41, 42 mit integriertem Reduziergetriebe 51, 52 sind beispielsweise unter der Bezeichnung PW 119C von Pratt & Whitney Canada erhältlich sind.

Jeder Antriebseinheit 31, 32 ist eine Motor-Generatoreinheit 71, 72 zugeordnet; welche jeweils antriebsseitig mit dem Reduziergetriebe 51, 52 gekoppelt ist. Die Motor-Generatoreinheit 71, 72 lässt sich je nach Betriebsphase als Elektromotor oder als Generator betreiben. Im Antriebsmodus überträgt die Motor-Generatoreinheit 71, 72 Antriebsleistung über das Reduziergetriebe 51, 52 auf den jeweilig zugeordneten Propeller 61, 62. Im Generatormodus generiert die Motor-Generatoreinheit 71, 72 elektrische Leistung, die einer Übertragungseinrichtung 80 zugeführt wird. Funktionaler Bestandteil der Übertragungseinrichtung 80 sind zwei Leistungswandler 81 und 82, wovon jeweils einer je einer Motor-Generatoreinheit 71, 72 zugeordnet ist (**Fig. 1b****)**.

Zur Steuerung der thermisch und elektrisch generierten Antriebsleistung ist ein zentraler Controller 90 vorgesehen, welcher mit Leistungswandler 81 und 82 und den Gasturbinen 41, 42 verbunden ist. Einerseits steuert der Controller 90 je nach Betriebsphase über die Leistungswandler 81 und 82 die Motor-Generatoreinheit 71, 72 die Abgabe elektrischer Antriebsleistung sowie die zu generierenden elektrische Energie und andererseits die thermisch generierte Antriebsleistung der Gasturbinen 41, 42. Typische zu steuernde und zu überwachende Parameter des Controllers 90 sind die Kraftstoffzufuhr, die Drehzahlen der Leistungs- und Hochdruckwelle und Turbinentemperatur der Gasturbinen 41, 42.

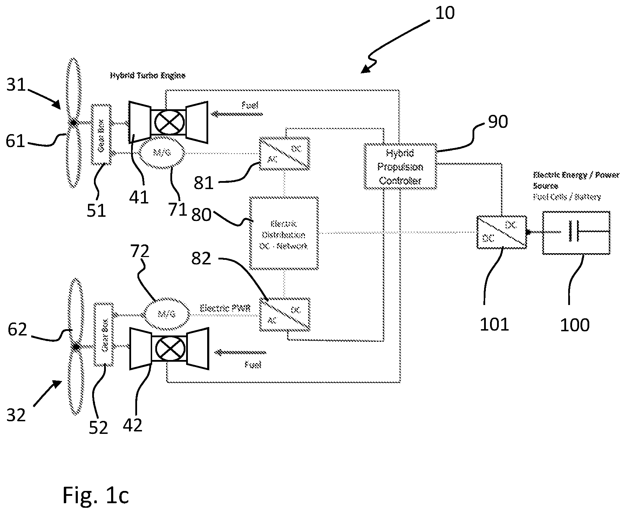

In einer weiteren Ausführungsform ist in **Fig. 1c** eine Architektur gezeigt, die auf einem Gleichspannungsnetzwerk 101 und Wechsel-Gleichspannungsumrichter 81, 82 beruht. Diese Architektur unterscheidet sich von der nach **Fig. 1b** durch die Hinzufügung einer zusätzlichen elektrischen Energiequelle 100. Zusätzlich zu der individuellen Regelung besteht die Möglichkeit die zusätzliche elektrische Energiequelle 100 während des Wechsels der Betriebsmodi, als ergänzende Energiequelle (Enegiepuffer) über die Übertragungseinrichtung 80 zuzuschalten, oder einen kurzen Leistungsbedarf, z.B. in einem Fehlerfall, zu überbrücken. Je nach Erfordernis kann die Leistungsabgabe der Energiequelle 100 über die Übertragungseinrichtung 80 und die Wechsel-Gleichspannungsumrichter 81, 82 der ersten oder zweiten Motor-Generatoreinheit 71 bzw. 72 zugeführt und die Antriebsleistung über die Reduziergetriebe 51 bzw. 52 auf die Propeller 61 bzw. 62 übertragen werden.

Eine typische Einbaukonfiguration für ein zweimotoriges Regionalflugzeug 20 ist am Beispiel der Dornier 328-100 in **Fig. 2** zu sehen. Das Flugzeug 20 ist als Schulterdecker mit T-Leitwerk ausgeführt. In den Triebwerksgondeln 33 und 34, wovon je eine am linken und rechten Flügel angebracht ist, sind die hybrid-elektrischen Antriebseinheiten 31 und 32 untergebracht. Über die ebenfalls in den Triebwerksgondeln 33 und 34 integrierten Reduziergetrieben werden die mehrblättrigen und verstellbaren Propeller 61, 62 angetrieben. Zur Vermeidung von unerwünschten Vereisungserscheinungen an den Propellerblättern sind diese elektrisch beheizbar, den Strom zur Beheizung erhalten die Propellerblätter von der Übertragungseinrichtung 80.

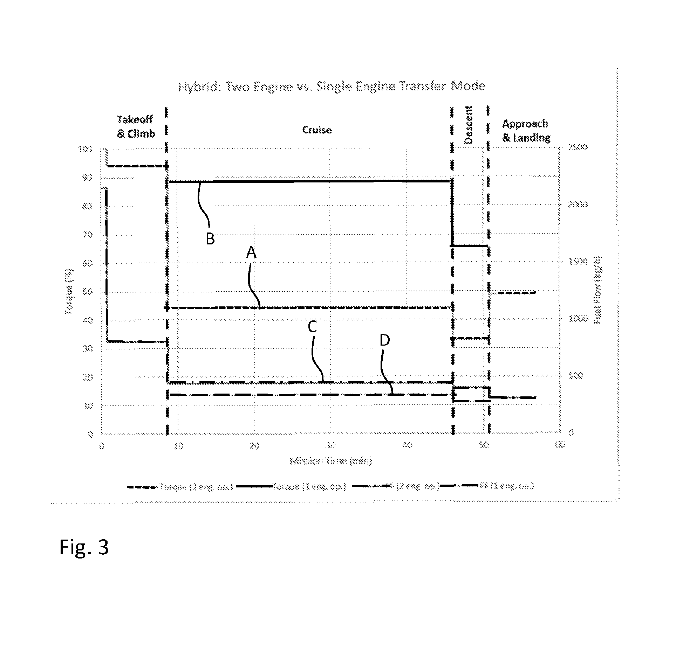

Das Diagramm der **Fig. 3** zeigt für den Reiseflug am Beispiel einer Dornier 328 den Unterschied eines Flugzeuges 20 mit einem erfindungsgemäßen Antriebssystems 10 zum Stand der Technik am Beispiel einer mit zwei konventionellen Triebwerken ausgestatteten Dornier 328. Das Diagramm **Fig. 3** stellt den Drehmomentbedarf und Kraftstoffverbrauch eines Antriebssystems 10 für die erforderliche Schuberzeugung in den jeweiligen Betriebsphasen:
Linie A: Drehmomentverlauf eines konventionellen Antriebes über die Mission im Standardbetrieb mit zwei laufenden Triebwerken.
Linie B: Drehmomentverlauf einer hybrid-elektrische Antriebseinheit über die Mission im optimierten "Single Engine Operation" Mode für die Reiseflugphase (,sekundäre Betriebsmodus'). Dabei ist die zweite Gasturbine nicht in Betrieb.
Linie C: Zeigt den Kraftstofffluss im Standardbetrieb beider Triebwerke eines konventionellen Antriebes.
Linie D: Kraftstofffluss im Reiseflug im optimierten Betrieb (,sekundäre Betriebsmodus') mit einem hybriden Triebwerk und symmetrischem Schub aufgrund des elektrischen Betriebs des Propulsor auf der jeweils anderen Flugzeugseite.

Das Diagramm der **Fig. 3** macht einen wesentlichen Aspekt der Erfindung deutlich, dass nämlich für viele Flugzeuge, insbesondere für Regionalflugzeuge mit Propellerantrieb, der geforderte Schub für den Start gegenüber dem Reiseflug deutlich höher ist und damit die thermischen Maschinen über einen hohen Anteil der Flugmission nur bei rund der Hälfte ihrer Leistungsfähigkeit betrieben werden. D.h. der Betrieb konventioneller Turboprop-Antriebe erfolgt außerhalb des optimalen Betriebspunktes, der dem Punkt der maximalen Leistungsabgabe näher liegt.

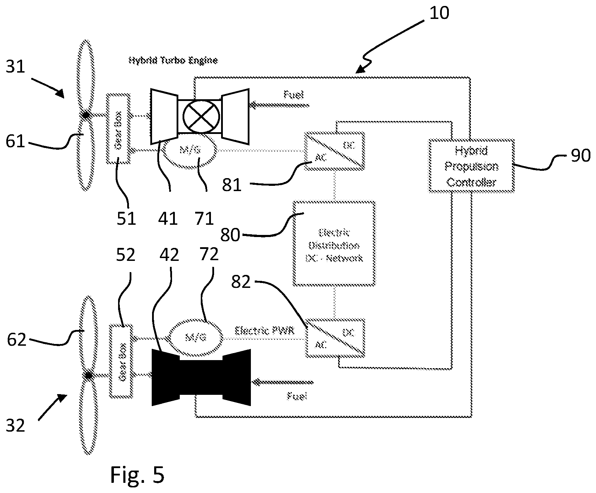

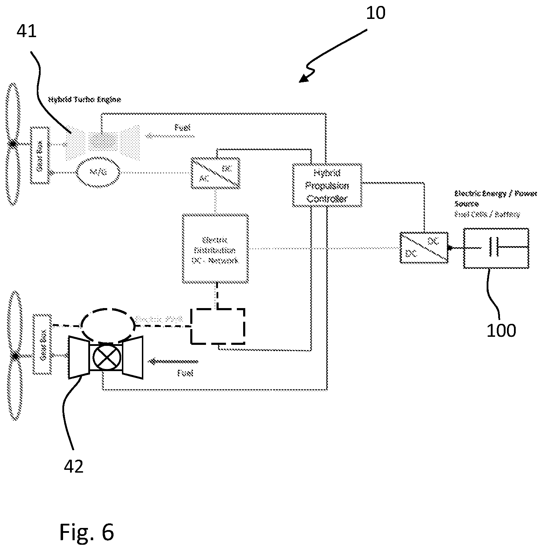

Hinsichtlich der Betriebsphasen des Antriebssystems ergeben sich folgende grundsätzliche Basisbetriebszustände:

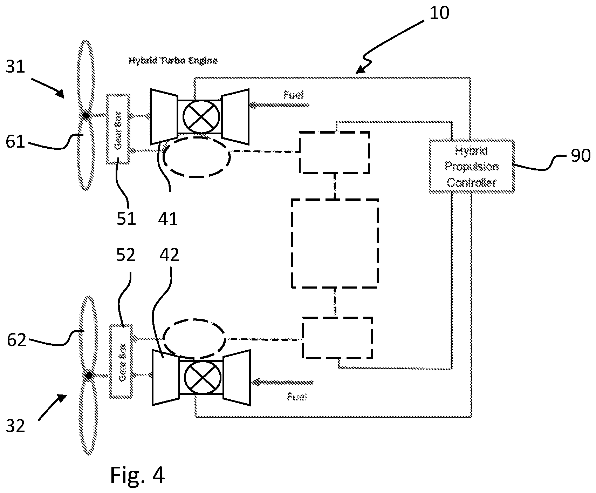

1. Die **Fig. 4** zeigt eine Systemskizze für Start, Steigflug und Landeanflug (Take-Off, Climb and Approach / Landing). Beide Gasturbinen 41 und 42 sind in Betrieb und treiben die Propeller 61, 62 über die zwischengeschalteten Reduziergetriebe 51, 52 an. Die Schubleistungsregelung erfolgt zentral über den Hybrid-Propulsion Controller 90 an die Gasturbinen 41 und 42 (,primäre Betriebsmodus').Die Motor-Generatoreinheiten 71 und 72 erbringen keine Antriebsleistung.
2. Der Systemzustand für Reiseflug und Sinkflug (Cruise and Decent) ist in **Fig. 5** zu sehen. Der Leistungs- / Drehmomentbedarf sinkt auf Reiseflugniveau, dabei wird die Leistung der ersten Gasturbine 41 heruntergefahren, während die andere, zweite hybride Antriebseinheit 32 auf voller Leistung weiterläuft und Schritt für Schritt Antriebsleistung von der zweiten Motor-Generatoreinheit 72 an die erste Motor-Generatoreinheit 71 abgeleitet wird, bis der Reiseflugleistungsbedarf auf beider Propeller 61 und 62 gleich verteilt ist und die ersten Gasturbine 41 abgeschaltet werden kann. Im Reiseflug und anschließenden Sinkflug wird der Schubbedarf über den hybriden Propulsion Controller 90 angepasst. Dieser ist für die thermische und elektrische Regelung zuständig (,sekundäre Betriebsmodus').
3. Die erfindungsgemäße Systemarchitektur ermöglicht auch im kritischen Fehlerfall, dem Ausfall einer Brennkraftmaschine einen symmetrischen Schub aufgrund der Leistungsverteilung über das elektrische Netzwerk. Ein solcher Systemzustand ist in **Fig. 5** dargestellt und stimmt somit hinsichtlich der aktivierten Komponenten mit dem zur **Fig. 5** beschriebenen sekundären Betriebsmodus überein. Damit erhöht sich mit der vorhandenen Leistung eines Triebwerkes auch die Manövrierfähigkeit und die Sicherheit in kritischen Situationen. Dabei gibt es eine zweite mögliche Variante, wonach eine zusätzlicher Energiequelle 100 (siehe **Abb. 6****:** Betriebszustand Ausfall einer thermischen Maschine mit Energiequelle 100) verwendet wird. Für diese Variante ist die Dimensionierung der Energiequelle 100 für diesen Fehlerfall entscheidend. In beiden Varianten ist die geforderte Zuverlässigkeit bzw. Redundanz für den Start mit einer Gasturbine 41 oder 42 sicherzustellen. Da in den kritischen Flugphasen Start, Steigflug und Landeanflug jedoch beide Gasturbinen 41 und 42 standardmäßig in Betrieb sind, bedeutet es hier ein deutlich erhöhtes Maß an Flugsicherheit.

### Bezugszeichenliste

- 10: Antriebssystem
- 20: Flugzeug
- 31, 32: Antriebseinheiten
- 33, 34: Triebwerksgondel
- 41, 42: Gasturbine
- 51, 52: Reduziergetriebe
- 61, 62: Propeller
- 71, 72: Motor-Generatoreinheiten
- 80: Übertragungseinrichtung
- 81, 82: Leistungswandler
- 90: Controller

- A, B, C, D: Linien

## Patentansprüche

1. Mehrmotoriges Flugzeug (20) mit
• zumindest einem ersten und einer zweiten hybrid-elektrischen Antriebseinheit (31, 32), die jeweils ein Turboprop-Triebwerk mit jeweils einer Gasturbine (41, 42), eine Motor-Generatoreinheit (71, 72) und ein drehzahlverminderndes Getriebe (51, 52) zur Übertragung von Antriebsleistung von der Gasturbine (41, 42) auf einen Propeller (61, 62) aufweist,
• wobei der Propeller (61, 62), die Gasturbine (41, 42) und die Motor-Generatoreinheit (71, 72) zur Verteilung von Drehmoment mit dem Getriebe (51, 52) kuppelbar sind,
• die Motor-Generatoreinheit (71, 72) je nach Betriebsmodus über einen Controller (90) gesteuert mit dem Getriebe (51, 52) koppelbar ist.
• die erste und zweite Motor-Generatoreinheiten (71, 72) zur Verteilung von elektrischer Leistung mit einer Übertragungseinrichtung (80) verbunden sind
• der Controller (90) zur Steuerung der thermisch und elektrisch generierten Antriebsleistung zumindest mit den Gasturbinen (41, 42), und der Übertragungseinrichtung (80) verbunden ist,
• wobei die Propeller (61, 62) in einem **primären Betriebsmodus** die Antriebsleistung überwiegend oder vollkommen von der mit dem jeweiligen Getriebe (51, 52) gekoppelten Gasturbine (41, 42) erhalten und
• in einem **sekundären Betriebsmodus** die erste oder zweite Gasturbine (41, 42) über das erste bzw. zweite Getriebe (51, 52) Antriebsleistung einerseits auf den ersten bzw. zweiten Propeller (61, 62) und andererseits auf die erste bzw. zweite Motor-Generatoreinheit (71, 72) überträgt, deren generierte elektrische Leistung über die Übertragungseinrichtung (80) an die zweite bzw. erste Motor-Generatoreinheit (72, 71) übertragen wird, die wiederum über das zweite bzw erste Getriebe (52, 51) Antriebsleistung an den zweiten bzw. ersten Propeller (62, 61) überträgt und die zweite bzw. erste Gasturbine (42, 41) abgeschaltet ist oder keine Antriebsleistung überträgt.
**dadurch gekennzeichnet, dass**
• die Antriebsleistung der ersten bzw. zweiten Gasturbine (41, 42) im sekundären Betriebsmodus und insbesondere im Reiseflug in einem Bereich von 90% bis 100% der maximal möglichen Leistungsabgabe der Gasturbine (41, 42) beträgt und
• die elektrische Antriebsleistung der ersten bzw. zweiten Motor-Generatoreinheit (71, 72) beim Übergang zwischen den Betriebsmodi variabel zuschaltbar ist.

2. Flugzeug nach Anspruch 1, **dadurch gekennzeichnet, dass** der Controller (90) im primären und sekundären Betriebsmodus eine symmetrische Verteilung der Antriebsleistung auf die Propeller (61, 62) bewirkt.

3. Flugzeug nach einem der vorhergehenden Ansprüche, **dadurch gekennzeichnet, dass** der Wechsel der Übertragung der Antriebsleistung der Gasturbine (41, 42) und der Antriebsleistung der Motor-Generatoreinheit (71, 72) auf das Getriebe (51, 52) der gemeinsamen Antriebseinheit derart sukzessive erfolgt, dass die an den Propeller (61, 62) der gemeinsamen Antriebseinheit (31, 32) abgegebene Antriebsleistung etwa gleich bleibt.

4. Flugzeug nach einem der vorhergehenden Ansprüche, **dadurch gekennzeichnet, dass** die Propeller (61, 62) als Propeller mit Blattverstellung ausgeführt sind und der Controller (90) zur Steuerung der Antriebsleistung mit der Blattverstellung verbunden ist.

5. Flugzeug nach einem der vorhergehenden Ansprüche, **dadurch gekennzeichnet, dass** das Flugzeug (10) mit einer zusätzlichen Energiequelle (100) ausgestattet ist, welche zur Übertragung von elektrischer Leistung über die Übertragungseinrichtung (80) mit der ersten und zweiten Motor-Generatoreinheit (71, 72) verbunden ist.

6. Flugzeug nach Anspruch 5, **dadurch gekennzeichnet, dass** die zusätzliche Energiequelle (100) als Brennstoffzelle oder Batterie ausgeführt ist, wobei die Energiequelle über die Übertragungseinrichtung (80) von der ersten und/oder zweiten Motor-Generatoreinheit (71, 72) ladbar ist.

7. Flugzeug nach Anspruch 5 oder 6, **dadurch gekennzeichnet, dass** in einem weiteren Betriebsmodus die Antriebsleistung der ersten oder zweiten Gasturbine (41, 42) vollkommen oder überwiegend ausgefallen ist und die erste bzw. zweite Motor-Generatoreinheit (71, 72) über die Übertragungseinrichtung (80) von der Energiequelle (100) mit elektrischer Leistung beaufschlagt wird.

8. Flugzeug nach einem der Ansprüche 1 bis 7, **dadurch gekennzeichnet, dass** die Übertragungseinrichtung (80) als Wechselstromnetzwerk ausgeführt ist.

9. Flugzeug nach einem der Ansprüche 1 bis 8, **dadurch gekennzeichnet, dass** die Übertragungseinrichtung (80) als Gleichstromnetzwerk ausgeführt ist, wobei jeder Motor-Generatoreinheit (71, 72) ein Wechsel-Gleichspannungsumrichter (81, 82) zugeordnet ist, welche zur Steuerung der Drehzahl des Propellers (61, 62) mit dem Controller (90) verbunden ist.

10. Verfahren zum Betrieb eines zweimotorigen Flugzeugs (20) nach einem der Ansprüche 1 bis 9, **dadurch gekennzeichnet, dass**
• das Rollen des Flugzeugs (20) insbesondere auf Vorfeldern und Taxiways im sekundären Betriebsmodus,
• der Start und der Steigflug auf Reiseflughöhe im primären Betriebsmodus,
• der Reise- und Sinkflug bis auf Anflughöhe im sekundären Betriebsmodus,
• der Anflug und die Landung im primären Betriebsmodus und
• bei Ausfall einer Gasturbine (41, 42) der Weiterflug im sekundären Betriebsmodus erfolgt.

## Claims

1. Multi-engine aircraft (20), comprising
• at least a first and a second hybrid-electric drive unit (31, 32), each having a turboprop engine with in each case a gas turbine (41, 42), a motor-generator unit (71, 72) and a speed-reducing transmission (51, 52) for transmitting drive power from the gas turbine (41, 42) to a propeller (61, 62),
• wherein the propeller (61, 62), the gas turbine (41, 42) and the motor-generator unit (71, 72) can be coupled to the transmission (51, 52) for the distribution of torque,
• the motor-generator unit (71, 72) can be coupled to the transmission (51, 52) in a controlled manner via a controller (90) depending on the operating mode,
• the first and second motor-generator units (71, 72) are connected to a transmission device (80) for distributing electrical power,
• the controller (90) is set up for controlling the thermally and electrically generated drive power and is connected to at least the gas turbines (41, 42) and the transmission device (80),
• wherein in a primary operating mode the propellers (61, 62) receive the drive power predominantly or entirely from the gas turbines (41, 42) coupled to the respective transmission (51, 52) and
• in a secondary operating mode the first or second gas turbine (41, 42) transmits drive power via the first or second transmission (51, 52) to the first or second propeller (61, 62) on the one hand and to the first or second motor-generator unit (71, 72) on the other hand, with their generated electrical power being transmitted via the transmission device (80) to the second or first motor-generator unit (72, 71), which in turn transmits drive power via the second or first transmission (52, 51) to the second or first propeller (62, 61) and the second or first gas turbine (42, 41) is switched off or transmits no drive power, **characterized in that**
• the drive power of the first or second gas turbine (41, 42) in the secondary operating mode and in particular in cruise flight is in a range from 90% to 100% of the maximum possible power output of the gas turbine (41, 42), and
• the electrical drive power of the first or second motor-generator unit (71, 72) can be switched on variably during the transition between the operating modes.

2. Aircraft according to claim 1, **characterized in that** the controller (90) effects a symmetrical distribution of the drive power to the propellers (61, 62) in the primary and secondary operating modes.

3. Aircraft according to one of the preceding claims, **characterized in that** the change in the transmission of the drive power of the gas turbine (41, 42) and the drive power of the motor-generator unit (71, 72) to the transmission (51, 52) of the common drive unit takes place successively in such a way that the drive power delivered to the propeller (61, 62) of the common drive unit (31, 32) remains approximately the same.

4. Aircraft according to one of the preceding claims, **characterized in that** the propellers (61, 62) are designed as propellers with pitch control and the controller (90) for controlling the drive power is connected to the pitch control.

5. Aircraft according to one of the preceding claims, **characterized in that** the aircraft (10) is equipped with an additional energy source (100), which is connected to the first and second motor-generator unit (71, 72) for transmitting electrical power via the transmission device (80).

6. Aircraft according to claim 5, **characterized in that** the additional energy source (100) is designed as a fuel cell or battery, wherein the energy source can be charged by the first and/or second motor-generator unit (71, 72) via the transmission device (80).

7. Aircraft according to claim 5 or 6, **characterized in that**, in a further operating mode, the drive power of the first or second gas turbine (41, 42) has completely or predominantly failed and the first or second motor-generator unit (71, 72) is supplied with electrical power from the energy source (100) via the transmission device (80).

8. Aircraft according to one of claims 1 to 7, **characterized in that** the transmission device (80) is designed as an AC network.

9. Aircraft according to one of claims 1 to 8, **characterized in that** the transmission device (80) is designed as a DC network, wherein each motor-generator unit (71, 72) is assigned an AC-DC converter (81, 82) which is connected to the controller (90) to control the speed of the propeller (61, 62).

10. Method for operating a twin-engine aircraft (20) according to one of claims 1 to 9, **characterized in that**
• the taxiing of the aircraft (20), in particular on aprons and taxiways, is in secondary operating mode,
• the take-off and climb to cruising altitude is in the primary operating mode,
• the cruise and descent to approach altitude is in secondary operating mode,
• the approach and landing is in the primary operating mode and
• in the event of failure of a gas turbine (41, 42), the flight continues in secondary operating mode.

## Revendications

1. Avion multimoteur (20) possédant
• au moins une première unité de propulsion électrique hybride et une deuxième (31, 32), qui comportent chacune un turbopropulseur avec une turbine à gaz (41, 42), un groupe moteur-générateur (71, 72) et un réducteur (51, 52) pour la transmission de puissance de propulsion de la turbine à gaz (41, 42) à une hélice (61, 62),
• dans lequel l'hélice (61, 62), la turbine à gaz (41, 42) et le groupe moteur-générateur (71, 72) peuvent être couplés au réducteur (51, 52) en vue de la distribution du couple de rotation,
• le groupe moteur-générateur (71, 72) peut être couplé au réducteur (51, 52) selon le mode de fonctionnement sous la commande d'un contrôleur (90) ;
• les premier et deuxième groupes moteur-générateur (71, 72) sont reliés à une installation de transmission (80) pour la distribution de puissance électrique ;
• le contrôleur (90) est configuré pour contrôler la puissance de propulsion générée par des moyens thermiques et électriques et relié au moins aux turbines à gaz (41, 42) et à l'installation de transmission (80),
• les hélices (61, 62) recevant principalement ou entièrement la puissance de propulsion, dans un mode de fonctionnement primaire, des moteurs à turbines à gaz (41, 42) couplés aux réducteurs (51, 52) correspondants et
• la première ou la deuxième turbine à gaz (41, 42) transmettant la puissance de propulsion via le premier réducteur ou le deuxième (51, 52), dans un mode de fonctionnement secondaire, d'une part à la première ou deuxième hélice (61, 62) et, d'autre part, au premier ou deuxième groupe moteur-générateur (71, 72), dont la puissance électrique générée est transmise via l'installation de transmission (80) au deuxième ou premier groupe moteur-générateur (72, 71), qui transmet à son tour la puissance de propulsion à la deuxième ou première hélice (62, 61), via le deuxième ou premier réducteur (52, 51), et la deuxième ou première turbine à gaz (42, 41) est arrêtée ou ne transmet aucune puissance de propulsion, **caractérisé en ce que**
• la puissance de propulsion de la première ou deuxième turbine à gaz (41, 42) dans le mode de fonctionnement secondaire et en particulier en vol de croisière se situe entre 90 % et 100 % de la puissance maximale possible délivrée par la turbine à gaz (41, 42) et
• la puissance de propulsion électrique du premier ou deuxième groupe moteur-générateur (71, 72) peut être appliquée de façon variable lors de la transition entre les modes de fonctionnement.

2. Avion selon la revendication 1, **caractérisé en ce que** le contrôleur (90) réalise, dans les modes de fonctionnement primaire et secondaire, une distribution symétrique de la puissance de propulsion aux hélices (61, 62).

3. Avion selon l'une des revendications précédentes, **caractérisé en ce que** le changement de transmission de la puissance de propulsion de la turbine à gaz (41, 42) et de la puissance de propulsion du groupe moteur-générateur (71, 72) au réducteur (51, 52) de l'unité de propulsion commune s'effectue progressivement, de telle sorte que la puissance de propulsion délivrée à l'hélice (61, 62) par l'unité de propulsion commune (31, 32) reste approximativement la même.

4. Avion selon l'une des revendications précédentes, **caractérisé en ce que** les hélices (61, 62) sont réalisées comme des hélices à pas variable et le contrôleur (90) est connecté à la variation de pas afin de contrôler la puissance de propulsion.

5. Avion selon l'une des revendications précédentes, **caractérisé en ce que** l'avion (10) est équipé d'une source d'énergie supplémentaire (100) qui est reliée aux premier et deuxième groupes moteur-générateur (71, 72) via l'installation de transmission (80) pour transmettre une puissance électrique.

6. Avion selon la revendication 5, **caractérisé en ce que** la source d'énergie supplémentaire (100) est réalisée comme une pile à combustible ou une batterie, la source d'énergie pouvant être chargée via l'installation de transmission (80) par le premier groupe moteur-générateur et/ou le deuxième (71, 72).

7. Avion selon la revendication 5 ou 6, **caractérisé en ce que**, dans une autre mode de fonctionnement, la puissance de propulsion de la première ou deuxième turbine à gaz (41, 42) est complètement ou en majeure partie coupée et le premier ou deuxième groupe moteur-générateur (71, 72) reçoit une puissance électrique de la source d'énergie (100) via l'installation de transmission (80).

8. Avion selon l'une des revendications 1 à 7, **caractérisé en ce que** l'installation de transmission (80) est réalisée comme un réseau de courant alternatif.

9. Avion selon l'une des revendications 1 à 8, **caractérisé en ce que** l'installation de transmission (80) est réalisée comme un réseau de courant continu, chaque groupe moteur-générateur (71, 72) étant associé à un convertisseur alternatif-continu (81, 82) qui est relié au contrôleur (90) pour contrôler la vitesse de rotation de l'hélice (61, 62).

10. Procédé pour le fonctionnement d'un avion bimoteur (20) selon l'une des revendications 1 à 9, **caractérisé en ce que**
• le roulage de l'avion (20), en particulier sur les aires de stationnement et les voies de circulation, s'effectue dans le mode de fonctionnement secondaire,
• le décollage et l'ascension à l'altitude de croisière dans le mode de fonctionnement primaire,
• le vol de croisière et la descente jusqu'à l'altitude d'approche dans le mode de fonctionnement secondaire,
• l'approche et l'atterrissage dans le mode de fonctionnement primaire et,
• en cas de panne d'une turbine à gaz (41, 42), le vol se poursuit dans le mode de fonctionnement secondaire.
